(19) Europäisches Patentamt
European Patent Office
Office européen des brevets

(11) **EP 4 234 640 A1**

(12) **EUROPEAN PATENT APPLICATION**
published in accordance with Art. 153(4) EPC

(43) Date of publication:
**30.08.2023 Bulletin 2023/35**

(21) Application number: **22749515.7**

(22) Date of filing: **21.01.2022**

(51) International Patent Classification (IPC):
**C09C 1/48** (2006.01)    **C09C 1/54** (2006.01)
**H01M 4/62** (2006.01)    **C01B 32/05** (2017.01)

(52) Cooperative Patent Classification (CPC):
**C01B 32/05; C09C 1/48; C09C 1/54; H01M 4/62;**
**Y02E 60/10**

(86) International application number:
**PCT/JP2022/002241**

(87) International publication number:
**WO 2022/168640 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2021 JP 2021017666**

(71) Applicant: **Denka Company Limited
Tokyo 103-8338 (JP)**

(72) Inventors:
• **ITO, Tetsuya**
  **Tokyo 103-8338 (JP)**
• **HARADA, Yusaku**
  **Tokyo 103-8338 (JP)**
• **TANAKA, Kosuke**
  **Tokyo 103-8338 (JP)**
• **NAGAI, Tatsuya**
  **Tokyo 103-8338 (JP)**

(74) Representative: **Hoffmann Eitle
Patent- und Rechtsanwälte PartmbB
Arabellastraße 30
81925 München (DE)**

(54) **CARBON BLACK, CARBON BLACK PRODUCTION METHOD, COMPOSITION FOR ELECTRODE, ELECTRODE, AND SECONDARY BATTERY**

(57)    Carbon black in which an oil absorption amount is 150 mL/100 g or more and 400 mL/100 g or less and a cobalt content that is measured by induced coupled plasma-mass spectrometry is 20 ppb or less.

EP 4 234 640 A1

**Description**

**Technical Field**

The present invention relates to carbon black, a production method thereof, a composition for an electrode containing carbon black, an electrode, and a secondary battery.

**Background Art**

Conventionally, carbon black has been in use as a conductive material or the like, and studies are underway to develop carbon black having a variety of characteristic values (for example, Patent Literature 1).
In addition, Patent Literature 2 describes a method for producing high-purity furnace black by a specific production method.

**Citation List**

**Patent Literature**

[Patent Document 1] Japanese Unexamined Patent Publication No. 2009-035598
[Patent Document 2] Japanese Unexamined Patent Publication No. 2002-105355

**Summary of Invention**

**Technical Problem**

In recent years, the increasing demand for portable electronic devices has increased the demand for secondary batteries, and good ideas for reducing defect rates are in demand for materials configuring secondary batteries.
As a material that is used as a conductive material for secondary batteries, carbon black is a typical example. However, carbon black that is produced by the method described in Patent Literature 2 has a high purity but is not excellent in terms of characteristics suitable for conductive materials for secondary batteries.
Therefore, an objective of the present invention is to provide carbon black that has an extremely small cobalt content and can be suitably used as a conductive material for secondary batteries. In addition, another objective of the present invention is to provide a production method of the carbon black. Still another objective of the present invention is to provide a composition for an electrode containing the carbon black, an electrode, and a secondary battery.

**Solution to Problem**

One aspect of the present invention relates to carbon black in which an oil absorption amount is 150 mL/100 g or more and 400 mL/100 g or less, and a cobalt content that is measured by induced coupled plasma-mass spectrometry is 20 ppb or less.
In one aspect, the cobalt content may be 15 ppb or less.
In the carbon black according to one aspect, a BET specific surface area may be 35 $m^2$/g or more and 400 $m^2$/g or less.
In the carbon black according to one aspect, the BET specific surface area may be 130 $m^2$/g or more and 400 $m^2$/g or less, the oil absorption amount may be 200 mL/100 g or more and 400 mL/100 g or less, and, when the BET specific surface area is represented by S ($m^2$/g) and the oil absorption amount is represented by A (mL/100 g), a ratio S/A may be 0.3 to 2.5.
In one aspect, the ratio S/A may be 0.4 to 2.5.
In one aspect, the ratio S/A may be 0.5 to 1.5.
The carbon black according to one aspect may be acetylene black.
Another aspect of the present invention relates to a carbon black production method including a synthesis step of treating a raw material gas containing a hydrocarbon in a cylindrical cracking furnace to obtain carbon black and a purification step of removing a magnetic foreign matter from the carbon black with a magnet to obtain the carbon black according to the present invention.
In one aspect, the purification step may be a step of removing the magnetic foreign matter from the carbon black obtained in the synthesis step by bringing the carbon black into contact with the magnet or disposing the carbon black near the magnet.

In one aspect, a maximum surface magnetic flux density of the magnet may be 1000 mT or more.

Still another aspect of the present invention relates to a composition for an electrode containing the carbon black according to the present invention and an active material capable of intercalating and deintercalating lithium ions.

Far still another aspect of the present invention relates to an electrode containing the composition for an electrode.

Far still another aspect of the present invention relates to a secondary battery including the electrode.

**Advantageous Effects of Invention**

According to the present invention, carbon black that has an extremely small cobalt content and can be suitably used as a conductive material for secondary batteries is provided. In addition, according to the present invention, a production method of the carbon black is provided. Furthermore, according to the present invention, a composition for an electrode containing the carbon black, an electrode, and a secondary battery are provided.

**Brief Description of Drawings**

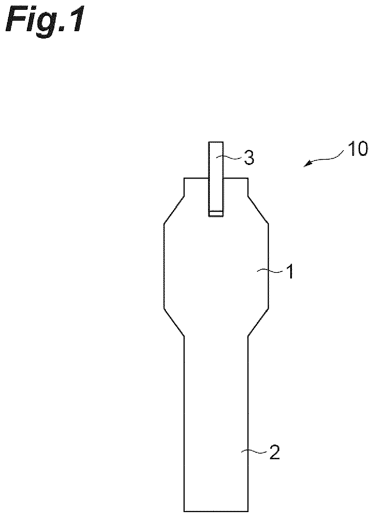

FIG. 1 is a schematic cross-sectional view showing one aspect of a cylindrical cracking furnace.

**Description of Embodiments**

Hereinafter, a preferable embodiment of the present invention will be described in detail.

(Carbon black)

Carbon black of the present embodiment is carbon black in which the oil absorption amount is 150 mL/100 g or more and 400 mL/100 g or less and the cobalt content is 20 ppb or less.

Such carbon black allows incorporation of only an extremely small amount of a cobalt-based foreign matter and is capable of significantly suppressing the generation of a defect attributed to the cobalt-based foreign matter. In addition, the carbon black has a sufficient oil absorption amount and thus easily retains an electrolytic solution and is capable of efficiently supplying lithium ions to active materials in the case of being used as, for example, a conductive material for an electrode in a lithium secondary battery. In addition, the carbon black has favorable dispersibility and can be dispersed uniformly between, for example, active materials. Therefore, according to the carbon black, it is possible to realize a secondary battery having excellent battery performance in which only a few defects are generated.

The cobalt content of the carbon black is preferably 15 ppb or less, more preferably 13 ppb or less and still more preferably 10 ppb or less.

In the present embodiment, as the cobalt content of the carbon black, a value that is measured by inductively coupled plasma-mass spectroscopy is shown. Measurement by inductively coupled plasma-mass spectroscopy is performed by, specifically, the following method.

<Measurement by inductively coupled plasma-mass spectroscopy>

Approximately 1 g of a carbon black sample was accurately weighed in a quartz beaker and heated at 800°C for three hours with an electric furnace in the atmosphere. Next, 10 mL of an acid mixture (hydrochloric acid + nitric acid = 7:3) and 10 mL or more of ultrapure water were added to a residue and heated and dissolved on a hot plate at 200°C for one hour. A solution that had been left to be cooled, then, diluted and adjusted to 25 mL with ultrapure water was measured with an inductively coupled plasma-mass spectrometer (Agilent 8800 manufactured by Agilent Technologies, Inc.).

The carbon black of the present embodiment may be a carbon material having aggregates in which primary particles having diameters of several tens of nanometers fuse together in bead shapes (primary aggregates) and, furthermore, forming an agglomerate in which the aggregates physically tangle together (secondary aggregate).

The BET specific surface area of the carbon black is, for example, 35 $m^2$/g or more, preferably 50 $m^2$/g or more, more preferably 100 $m^2$/g or more, still more preferably 130 $m^2$/g or more, far still more preferably 150 $m^2$/g or more and further still more preferably 170 $m^2$/g or more. In such a case, for example, in a case where the carbon black is used as a conductive material for an electrode of a lithium ion secondary battery, there is a tendency that the number of contact points between an active material and a current collector further increases and it becomes easy to obtain a more favorable effect of imparting conductivity. In addition, the BET specific surface area of the carbon black may be, for example, 400 $m^2$/g or less and is preferably 350 $m^2$/g or less. In such a case, the interaction between primary particles and the entanglement between aggregates are suppressed, the dispersibility further improves, and more uniform dispersion between, for example, active materials is realized. That is, the BET specific surface area of the carbon black may be, for example, 35 to 400 m$^2$/g, 35 to 350 m$^2$/g, 50 to 400 m$^2$/g, 50 to 350 m$^2$/g, 100 to 400 m$^2$/g, 100 to 350 m$^2$/g, 130 to 400 m$^2$/g, 130 to 350 m$^2$/g, 150 to 400 m$^2$/g, 150 to 350 m$^2$/g, 170 to 400 m$^2$/g or 170 to 350 m$^2$/g.

The BET specific surface area of the carbon black is measured by the method B described in JIS K 6217-2, Determination of Specific Surface Area - Nitrogen Adsorption Methods - Single-point Procedures.

The oil absorption amount of the carbon black is 150 mL/100 g or more, preferably 180 mL/100 g or more, more preferably 220 mL/100 g or more and still more preferably 260 m$^2$/100 g or more. In such a case, for example, in a case where the carbon black is used as a conductive material for an electrode of a lithium ion secondary battery, the carbon black more easily retains an electrolytic solution, the supply of lithium ions to active materials becomes easier, and it becomes easy to obtain more favorable battery performance. In addition, the oil absorption amount of the carbon black is 400 mL/100 g or less, preferably 370 mL/100 g or less and more preferably 350 mL/100 g or less. In such a case, the entanglement of the agglomerate is loosened, the dispersibility further improves, and more uniform dispersion between, for example, active materials is realized. That is, the oil absorption amount of the carbon black may be, for example, 150 to 400 mL/100 g, 150 to 370 mL/100 g, 150 to 350 mL/100 g, 180 to 400 mL/100 g, 180 to 370 mL/100 g, 180 to 350 mL/100 g, 220 to 400 mL/100 g, 220 to 370 mL/100 g, 220 to 350 mL/100 g, 260 to 400 mL/100 g, 260 to 370 mL/100 g or 260 to 350 mL/100 g.

As the oil absorption amount of the carbon black, a value obtained by converting a value measured by a method described in the method B of JIS K 6221 using dibutyl phthalate (DBP) as an oil to a value corresponding to JIS K 6217-4: 2008 by the following formula (a) is shown.

$$\text{DBP absorption amount} = (A - 10.974)/0.7833 \dots \text{(a)}$$

[In the formula, A represents the value of the DBP absorption amount measured by the method described in the method B of JIS K 6221.]

When the BET specific surface area of the carbon black is represented by S (m$^2$/g), and the oil absorption amount is represented by A (mL/100 g), the ratio S/A may be, for example, 0.2 or more and is preferably 0.3 or more, more preferably 0.4 or more and still more preferably 0.5 or more. In addition, the ratio S/A is, for example, 3.0 or less, preferably 2.0 or less, more preferably 1.5 or less and still more preferably 1.3 or less. In such a case, the balance among the number, sizes and dispersibility of the aggregates becomes more suitable for a conductive material for an electrode of a lithium ion secondary battery, it becomes easy to supply lithium ions to active materials while forming sufficient contact points between the active materials and current collectors, and it becomes easy to obtain more favorable battery performance. That is, the ratio S/A may be, for example, 0.2 to 3.0, 0.2 to 2.0, 0.2 to 1.5, 0.2 to 1.3, 0.3 to 3.0, 0.3 to 2.0, 0.3 to 1.5, 0.3 to 1.3, 0.4 to 3.0, 0.4 to 2.0, 0.4 to 1.5, 0.4 to 1.3, 0.5 to 3.0, 0.5 to 2.0, 0.5 to 1.5 or 0.5 to 1.3.

In one suitable aspect, the carbon black may have a BET specific surface area of 130 to 400 m$^2$/g, an oil absorption amount of 200 to 400 mL/100 g and a ratio S/A of 0.3 to 2.5 (preferably 0.4 to 2.5, more preferably 0.5 to 2.5 and still more preferably 0.5 to 1.5). Such carbon black has excellent electron conduction performance, ion conduction performance and dispersibility and thus can be particularly suitably used as a conductive material. Such carbon black is produced by, for example, a method to be described below, in which an oxygen gas is sprayed.

Within the ranges of the BET specific surface area and the oil absorption amount in the present aspect, there is a tendency that the removal of a magnetic foreign matter becomes more difficult as the ratio S/A becomes larger. In the carbon black of the present aspect, the cobalt content is decreased while the ratio S/A is intentionally kept within the above-described range, whereby both the above-described excellent effect as a conductive material and reduction of a disadvantage attributed to the magnetic foreign matter are satisfied.

The carbon black according to the present embodiment is preferably acetylene black.

The carbon black of the present embodiment can be produced by the following method.

(Carbon black production method)

A carbon black production method of the present embodiment includes a synthesis step of treating a raw material gas containing a hydrocarbon in a cylindrical cracking furnace to obtain carbon black and a purification step of removing a magnetic foreign matter from the carbon black obtained in the synthesis step with a magnet to obtain carbon black having an oil absorption amount of 150 mL/100 g or more and 400 mL/100 g or less and a cobalt content of 20 ppb or less.

In the synthesis step, a raw material gas is treated in a cylindrical cracking furnace. The cylindrical cracking furnace may be, for example, a cracking furnace including a thermal cracking portion where a thermal cracking reaction of the hydrocarbon is performed and an aging portion where a thermal cracking reaction product is reformed.

The cylindrical cracking furnace may further include a supply opening through which the raw material gas is supplied to the thermal cracking portion and a recovery opening through which carbon black generated in the aging portion is recovered.

In the cylindrical cracking furnace, from the viewpoint of more efficient removal of the magnetic foreign matter in the purification step, which will be described below, by additional homogenization of the carbon black, it is preferable that the ratio ($D_1/D_2$) of the diameter $D_1$ of the thermal cracking portion to the diameter $D_2$ of the aging portion is 1.2 to 2.2 and the ratio ($L_1/L_2$) of the length $L_1$ of the thermal cracking portion to the length $L_2$ of the aging portion is 0.4 to 1.0. In such a case, it is possible to retain the raw material gas supplied to the thermal cracking portion and thereby more reliably form carbon aerosols by the completion of the thermal cracking reaction and the development of aggregates.

The ratio ($D_1/D_2$) is preferably 1.3 to 1.8, and the ratio ($L_1/L_2$) is preferably 0.6 to 0.8. That is, the ratio ($D_1/D_2$) may be, for example, 1.2 to 2.2, 1.3 to 2.2, 1.2 to 1.8 or 1.3 to 1.8, and the ratio ($L_1/L_2$) may be, for example, 0.4 to 1.0, 0.6 to 1.0, 0.4 to 0.8 or 0.6 to 0.8.

In the thermal cracking portion, the supplied raw material gas is preferably retained at a temperature of 1900°C or higher for 30 to 150 seconds. When the retention time is set to 30 seconds or longer, it is possible to more reliably form carbon aerosols by the completion of the thermal cracking reaction and the development of a chain structure. In addition, when the retention time is set to 150 seconds or shorter, the aggregation of carbon aerosols is suppressed, and it becomes easy to obtain carbon black from which the magnetic foreign matter is more easily removed in the purification step to be described below.

In the aging portion, the thermal cracking reaction product supplied from the thermal cracking portion is preferably retained at a temperature of 1700°C or higher for 20 to 90 seconds. When the retention time is set to 20 seconds or longer, it becomes easy to obtain carbon black with a higher quality by the reforming of the carbon aerosols and the strengthening of aggregates. In addition, when the retention time is set to 90 seconds or shorter, the aggregation of the carbon aerosols is suppressed, and it becomes easy to obtain carbon black from which the magnetic foreign matter is more easily removed in the purification step to be described below.

The retention velocities in the thermal cracking portion and the aging portion can be each adjusted as appropriate by adjusting the gas linear velocity of a circulating gas. The retention time in the aging portion is preferably shorter than the retention time in the thermal cracking portion. That is, the gas linear velocity in the aging portion is preferably faster than the gas linear velocity in the thermal cracking portion.

FIG. 1 is a schematic cross-sectional view showing one aspect of the cylindrical cracking furnace. A cylindrical cracking furnace 10 shown in FIG. 1 includes a thermal cracking portion 1 and an aging portion 2. In addition, the cylindrical cracking furnace further includes a nozzle (supply opening) 3 through which a raw material gas is supplied to the thermal cracking portion 1.

In the present embodiment, the raw material gas preferably contains acetylene as a first carbon source. The content of the carbon source (for example, acetylene) in the raw material gas is, for example, 10 vol% or more, preferably 20 vol% or more and more preferably 30 vol% or more and may be 100 vol%. The content of each component in the raw material gas indicates a volume ratio relative to the volume at 150°C and one atmosphere.

The raw material gas may, furthermore, further contain one or more other carbon sources in addition to the first carbon source (for example, acetylene). Examples of the other carbon sources include saturated hydrocarbons such as methane, ethane and propane, unsaturated hydrocarbons such as ethylene, propylene and butadiene, aromatic hydrocarbons such as benzene, toluene and xylene and the like. When these carbon sources are combined together, it is possible to increase or decrease the specific surface area of carbon black by changing the reaction temperature. The carbon sources are preferably selected from the group consisting of acetylene, unsaturated hydrocarbons such as ethylene and propylene and aromatic hydrocarbons such as benzene and toluene. In addition, as the carbon source, a petroleum fraction such as gasoline, kerosene, light oil or heavy oil may also be used.

In a case where the raw material gas contains acetylene and other carbon sources, the ratio of the other carbon sources to acetylene (the volume of the other carbon sources/the volume of acetylene) may be, for example, 0.01 or more. In addition, the ratio of the other carbon sources to acetylene (the volume of the other carbon sources/the volume of acetylene) may be, for example, 99 or less and is preferably 50 or less, and more preferably 30 or less and may be 10 or less or two or less. That is, the ratio (volume ratio) of the other hydrocarbons to acetylene may be, for example, 0.01 to 99, 0.01 to 50, 0.01 to 30, 0.01 to 10 or 0.01 to 2.

The raw material gas may further contain a water vapor gas, an oxygen gas, a hydrogen gas, a carbon dioxide gas and the like. As these gases, 99.9 vol% or more of high-purity gases are preferably used. When such high-purity gases are used, there is a tendency that it becomes easy to produce carbon black in which the amount of the magnetic foreign matter is small and the BET specific surface area and the oil absorption amount are stable.

The content of the water vapor gas may be, for example, 0 to 80 parts by volume and is preferably 0.1 to 70 parts by volume, more preferably 1 to 60 parts by volume and still more preferably 3 to 55 parts by volume relative to 100 parts by volume of the carbon source (for example, acetylene) in the raw material gas. When the content of the water vapor gas is within the above-described range, there is a tendency that the BET specific surface area of the carbon black becomes larger. That is, the content of the water vapor gas may be, for example, 0 to 80 parts by volume, 0 to 70 parts by volume, 0 to 60 parts by volume, 0 to 55 parts by volume, 0.1 to 80 parts by volume, 0.1 to 70 parts by volume, 0.1 to 60 parts by volume, 0.1 to 55 parts by volume, 1 to 80 parts by volume, 1 to 70 parts by volume, 1 to 60 parts by volume, 1 to 55 parts by volume, 3 to 80 parts by volume, 3 to 70 parts by volume, 3 to 60 parts by volume or 3 to 55 parts by volume relative to 100 parts by volume of the carbon source (for example, acetylene) in the raw material gas.

In the synthesis step, it is preferable to supply the oxygen gas together with the raw material gas to the thermal cracking portion, and it is more preferable to supply the oxygen gas to the thermal cracking portion by spraying the oxygen gas from the circumference of the supply opening through which the raw material gas is supplied to the thermal cracking portion.

The cylindrical cracking furnace preferably has a spray opening for the oxygen gas near the supply opening of the raw material gas and more preferably has a plurality of spray openings provided at equal intervals so as to surround the supply opening. The number of the spray openings is preferably three or more and more preferably three to eight.

In addition, the cylindrical cracking furnace may also include a nozzle with a multi-tube structure (for example, a double tube structure, a triple tube structure or the like) having the supply opening of the raw material gas and the spray opening for spraying the oxygen gas from the circumference of the supply opening. In the case of a double tube structure, for example, the raw material gas may be sprayed from an air space portion on the inner cylinder side, and the oxygen gas may be sprayed from an air space portion on the outer cylinder side. In the case of a triple tube structure composed of an inner tube, a middle tube and an outer tube, for example, the oxygen gas may be sprayed from an air space portion that is formed by the outer wall of the middle tube and the inner wall of the outer tube, and the raw material gas may be sprayed from the remaining air space portion.

The amount of the oxygen gas sprayed is not particularly limited if the production yield of carbon black is not taken into account. Carbon black can be produced even when a larger amount of the oxygen gas than necessary is sprayed. From the viewpoint of obtaining carbon black having the above-described suitable oil absorption amount, the amount of the oxygen gas sprayed may be, for example, 0 to 200 parts by volume and is preferably 0.1 to 190 parts by volume, more preferably 0.5 to 180 parts by volume and still more preferably 1 to 160 parts by volume relative to 100 parts by volume of the carbon source (for example, acetylene) in the raw material gas. That is, the amount of the oxygen gas sprayed may be, for example, 0 to 200 parts by volume, 0 to 190 parts by volume, 0 to 180 parts by volume, 0 to 160 parts by volume, 0.1 to 200 parts by volume, 0.1 to 190 parts by volume, 0.1 to 180 parts by volume, 0.1 to 160 parts by volume, 0.5 to 200 parts by volume, 0.5 to 190 parts by volume, 0.5 to 180 parts by volume, 0.5 to 160 parts by volume, 1 to 200 parts by volume, 1 to 190 parts by volume, 1 to 180 parts by volume or 1 to 160 parts by volume relative to 100 parts by volume of the carbon source (for example, acetylene) in the raw material gas.

In the synthesis step, it is possible to increase or decrease the BET specific surface area and oil absorption amount of carbon black to be obtained by, for example, adjusting the addition rate of the other hydrocarbons other than acetylene, the amount of the oxygen gas to be sprayed or the like.

The cobalt content in the carbon black that is obtained in the synthesis step may be, for example, more than 20 ppb, may be 30 ppb or more, may be 50 ppb or more and may be 80 ppb or more.

The purification step is a step of removing a magnetic foreign matter from the carbon black obtained in the synthesis step with a magnet.

The purification step may be, for example, a step of removing a magnetic foreign matter from the carbon black obtained in the synthesis step by bringing the carbon black into contact with the magnet or disposing the carbon black near the magnet (for example, passing the carbon black through near the magnet).

The magnet that is used is not particularly limited, and, for example, a magnet bar having a neodymium magnet packed in a stainless steel 304 tube may be used.

The maximum surface magnetic flux density of the magnet is not particularly limited, but may be, for example, 700 mT or more and is preferably 1000 mT or more and more preferably 1200 mT or more. In such a case, a fine magnetic foreign matter attached to the carbon black is more strongly adsorbed, and thus it becomes easy to obtain carbon black having a smaller cobalt content. The upper limit of the maximum surface magnetic flux density of the magnet is not particularly limited and may be, for example, 1400 mT or less. That is, the maximum surface magnetic flux density of the magnet may be, for example, 700 to 1400 mT, 1000 to 1400 mT or 1200 to 1400 mT.

The purification step may be a step of removing the magnetic foreign matter from the carbon black so that the cobalt content reaches 20 ppb or less (preferably 15 ppb or less, more preferably 13 ppb or less and still more preferably 10 ppb or less). The lower limit of the cobalt content is not particularly limited, and the cobalt content in the carbon black may be, for example, 1 ppb or more, and, from the viewpoint of the cost and productivity, may be 5 ppb or more, may be 8 ppb or more and may be 50 ppb or more. That is, the cobalt content in the carbon black may be, for example, 5 to 20 ppb, 5 to 15 ppb, 5 to 13 ppb, 5 to 10 ppb, 8 to 20 ppb, 8 to 15 ppb, 8 to 13 ppb or 8 to 10 ppb.

(Applications)

Since the content of a cobalt-based foreign matter is significantly small, the carbon black of the present embodiment can be suitably used in applications such as conductive materials for secondary batteries and semi-conducting layers of power cables. In addition, since the oil absorption amount is within the above-described range, the carbon black of the present embodiment can be particularly suitably used as conductive materials for secondary batteries.

The carbon black of the present embodiment can be suitably used as, for example, a composition for an electrode containing carbon black and an active material capable of intercalating and deintercalating lithium ions. As the active material in the composition for an electrode, well-known active materials can be used with no particular limitations.

Examples of the active material include

layered compounds such as lithium cobalt oxide ($LiCoO_2$), lithium cobalt oxide ($LiNiO_2$), layered lithium manganese oxide ($LiMnO_2$) and $LiMn_xNi_yCo_zO_2$ ($x + y + z = 1$, $0 \leq y < 1$, $0 \leq z < 1$ and $0 \leq x < 1$), which is a complex oxide containing a plurality of transition metals;

manganese-based compounds such as $Li_{1+x}Mn_{2-x}O_4$ (x represents 0 to 0.33), $Li_{1+x}Mn_{2-x-y}M_yO_4$ (M represents at least one metal selected from the group consisting of Ni, Co, Cr, Cu, Fe, Al and Mg, x represents 0 to 0.33, y represents 0 to 1.0, and 2 - x - y > 0), $LiMnO_3$, $LiMn_2O_3$, $LiMnO_2$, $LiMn_{2-x}M_xO_2$ (M represents at least one metal selected from the group consisting of Co, Ni, Fe, Cr, Zn and Ta, and x represents 0.01 to 0.1) and $Li_2Mn_3MO_8$ (M represents at least one metal selected from Co, Ni, Fe, Cr and Zn);

copper-lithium oxide ($Li_2CuO_2$);

iron-lithium oxide ($LiFe_3O_4$);

olivine-based compounds such as $LiFePO_4$, $LiMnPO_4$, $LiMnFePO_4$ and $Li_2MPO_4F$ (M represents at least one metal selected from the group consisting of Co, Ni, Fe, Cr and Zn);

vanadium oxides such as $LiV_3O_8$, $V_2O_5$ and $Cu_2V_2O_7$;

disulfide compounds;

silicate-based compounds such as $Li_2MSiO_4$ (M represents at least one metal selected from the group consisting of Co, Ni, Fe, Cr, Zn and Ta); and

$Li_2MO_3 \cdot LiMO_2$ (M represents at least one metal selected from the group consisting of Mn, Co, Ni, Fe, Cr and Zn), $Fe_2(MoO_4)_3$, $Li_2S$, S and the like.

A secondary battery of the present embodiment includes an electrode containing the composition for an electrode. In the secondary battery of the present embodiment, a positive electrode and/or a negative electrode may contain the composition for an electrode, and it is preferable that the positive electrode contains the composition for an electrode.

In the secondary battery of the present embodiment, an electrode not containing the composition for an electrode and the configuration other than the electrode are not particularly limited, and well-known electrodes and configurations in secondary batteries can be used with no particular limitations.

Hitherto, the suitable embodiment of the present invention has been described, but the present invention is not limited to the above-described embodiment.

[Examples]

Hereinafter, the present invention will be described in more detail with examples, but the present invention is not limited to these examples.

(Example 1)

The mixing ratio of a raw material gas was set to 86 vol% of an acetylene gas to 14 vol% of other carbon source (toluene gas), the raw material gas was sprayed from a nozzle installed at the furnace top of a cylindrical cracking furnace at a spraying rate of 6.5 m/s, carbon black was produced using the thermal cracking and/or combustion reaction of the acetylene gas, and the carbon black was trapped into a middle tank from a bag filter directly connected to the furnace lower portion. (Synthesis step) the trapped carbon black was passed through a transfer tube equipped with a magnet for trapping a magnetic foreign matter (magnet bar having a neodymium magnet packed in a stainless steel 304 tube having $\phi$20 mm and a length of 300 mm, maximum surface magnetic flux density of 1000 mT) in the middle and trapped in a product tank (purification step), thereby obtaining carbon black (CB1). A conductive composition for an electrode and an electrode for a battery were produced by a method to be described below using the obtained CB1, and each evaluation was performed. The evaluation results are shown in Table 1.

(Example 2)

Carbon black (CB2) was obtained by the same method as in Example 1 except that the mixing ratio of the raw material gas was changed to 100 vol% of an acetylene gas. A conductive composition for an electrode and an electrode for a battery were produced using the obtained CB2, and each evaluation was performed. The evaluation results are shown in Table 1.

(Example 3)

Carbon black (CB3) was obtained by the same method as in Example 1 except that the mixing ratio of the raw material gas was changed to 71 vol% of an acetylene gas, 15 vol% of an oxygen gas, 12 vol% of water vapor and 2 vol% of other carbon source (toluene gas). A conductive composition for an electrode and an electrode for a battery were produced using the obtained CB3, and each evaluation was performed. The evaluation results are shown in Table 1.

(Example 4)

Carbon black (CB4) was obtained by the same method as in Example 1 except that the mixing ratio of the raw material gas was changed to 69 vol% of an acetylene gas, 8 vol% of an oxygen gas, 13 vol% of water vapor and 10 vol% of other carbon source (toluene gas). A conductive composition for an electrode and an electrode for a battery were produced using the obtained CB4, and each evaluation was performed. The evaluation results are shown in Table 1.

(Example 5)

Carbon black (CB5) was obtained by the same method as in Example 1 except that the mixing ratio of the raw material gas was changed to 67 vol% of an acetylene gas, 3 vol% of an oxygen gas, 15 vol% of water vapor and 15 vol% of other carbon source (benzene gas). A conductive composition for an electrode and an electrode for a battery were produced using the obtained CB5, and each evaluation was performed. The evaluation results are shown in Table 1.

(Example 6)

Carbon black (CB6) was obtained by the same method as in Example 1 except that the mixing ratio of the raw material gas was changed to 51 vol% of an acetylene gas, 27 vol% of an oxygen gas, 20 vol% of water vapor and 2 vol% of other carbon source (toluene gas). A conductive composition for an electrode and an electrode for a battery were produced using the obtained CB6, and each evaluation was performed. The evaluation results are shown in Table 1.

(Comparative Example 1)

Carbon black (CB7) was obtained by the same method as in Example 1 except that the mixing ratio of the raw material gas was changed to 71 vol% of an acetylene gas, 15 vol% of an oxygen gas, 12 vol% of water vapor and 2 vol% of other carbon source (toluene gas), the sample was collected from the middle tank, and the purification step was not performed. A conductive composition for an electrode and an electrode for a battery were produced using the obtained CB7, and each evaluation was performed. The evaluation results are shown in Table 1.

(Comparative Example 2)

Carbon black (CB8) was obtained by the same method as in Example 1 except that the mixing ratio of the raw material gas was changed to 67 vol% of an acetylene gas, 3 vol% of an oxygen gas, 15 vol% of water vapor and 15 vol% of other carbon source (benzene gas), the sample was collected from the middle tank, and the purification step was not performed. A conductive composition for an electrode and an electrode for a battery were produced using the obtained CB8, and each evaluation was performed. The evaluation results are shown in Table 1.

(Comparative Example 3)

As carbon black of Comparative Example 3, SUPER P Li (manufactured by IMERYS Graphite & Carbon, trade name: SUPER P Li) was prepared.

(Comparative Example 4)

As carbon black of Comparative Example 4, ECP (manufactured by Lion Specialty Chemicals Co., Ltd., trade name: CARBON ECP) was prepared.

<Evaluation methods>

(Measurement of cobalt content)

Approximately 1 g of a carbon black sample was accurately weighed in a quartz beaker and heated at 800°C for three hours with an electric furnace in the atmosphere. Next, 10 mL of an acid mixture (hydrochloric acid + nitric acid = 7:3) and 10 mL or more of ultrapure water were added to a residue and heated and dissolved on a hot plate at 200°C for one hour. A solution was left to be cooled, then, diluted and adjusted to 25 mL with ultrapure water, and the cobalt content was measured with an inductively coupled plasma-mass spectrometer (Agilent 8800 manufactured by Agilent Technologies, Inc.).

(Measurement of BET specific surface area)

The BET specific surface area of the carbon black was measured by a BET single-point method in accordance with the method B of JIS K 6217-2 using nitrogen as an adsorption gas under a condition of a relative pressure $p/p0 = 0.30 \pm 0.04$.

(Measurement of oil absorption amount)

As the oil absorption amount of the carbon black, a value obtained by converting a value measured by a method described in the method B of JIS K 6221 using dibutyl phthalate (DBP) as an oil to a value corresponding to JIS K 6217-4: 2008 by the following formula (a) is shown.

$$\text{DBP absorption amount} = (A - 10.974)/0.7833 \;\ldots\; (a)$$

[In the formula, A represents the value of the DBP absorption amount measured by the method described in the method B of JIS K 6221.]

(Preparation of dispersion liquid of composition for electrode)

N-methyl-2-pyrrolidone (manufactured by Kanto Chemical Co., Inc., hereinafter, referred to as NMP) was prepared as a solvent, $LiNi_{0.5}Mn_{0.3}Co_{0.2}O_2$ (manufactured by Umicore S.A., trade name: TX10) was prepared as an active material, polyvinyl fluoride (manufactured by Arkema S.A., trade name: HSV900, hereinafter, referred to as PVdF) was prepared as a binder, the carbon black of an example or a comparative example was prepared as a conductive material, and polyvinyl alcohol (manufactured by Denka Company Limited, trade name: B05, hereinafter, referred to as polyvinyl alcohol) was prepared as a dispersant, respectively. 98 mass% of $LiNi_{0.5}Mn_{0.3}Co_{0.2}O_2$ in terms of solid content, 2 mass% of PVdF in terms of solid content, 1 mass% of the carbon black in terms of solid content and 0.1 mass% of polyvinyl alcohol in terms of solid content were weighed and mixed, and NMP was added to this mixture so that the content of the solid content reached 68 mass% and mixed using a planetary centrifugal vacuum mixer (manufactured by Thinky Corporation, Thinky Mixer ARV-310) until the mixture became uniform, thereby obtaining a dispersion liquid of a composition for an electrode (composition for a positive electrode).

(Production of positive electrode)

A film of the prepared dispersion liquid of a composition for an electrode was formed on a 15 $\mu$m-thick aluminum foil (manufactured by UACJ Corporation) with an applicator and placed still in a dryer to be preliminarily dried at 105°C for one hour. Next, the film was pressed with a roll pressing machine at a linear pressure of 200 kg/cm to prepare a film so that the thickness of the film including the 15 $\mu$m-thick aluminum foil reached 80 $\mu$m. In order to remove a volatile component, the film was dried in a vacuum at 170°C for three hours, thereby obtaining a positive electrode.

(Electrode evaluation)

A disc having a diameter of 14 mm was cut out from the produced positive electrode, the alternating current impedance was measured using an electrochemical measurement system (manufactured by Solartron Analytical, function generator 1260 and potentiostat galvanostat 1287) at an amplitude voltage of 10 mV within a frequency range of 0.1 Hz to 1 MHz in a state where the front and back were sandwiched by SUS304 plate electrodes, and the intersection point with the X axis of a Cole-Cole plot was regarded as a resistance value.

The evaluation results of the examples and the comparative examples are shown in Table 1. In Table 1, the mixing ratio of "hydrocarbon gas" means the mixing ratio of the other carbon source.

[Table 1]

| | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Kind of carbon black (CB) | | CB1 | CB2 | CB3 | CB4 | CB5 | CB6 | CB7 | CB8 | SUPER P Li | ECP |
| Raw material gas mixing ratio (vol%) | Acetylene gas | 86 | 100 | 71 | 69 | 67 | 51 | 71 | 67 | - | - |
| | Oxygen gas | 0 | 0 | is | 8 | 3 | 27 | is | 3 | - | - |
| | Water vapor gas | 0 | 0 | 12 | 13 | is | 20 | 12 | is | - | - |
| | Hydrocarbon gas | 14 | 0 | 2 | 10 | 15 | 2 | 2 | 15 | - - | - - |
| Kind of hydrocarbon gas | | Toluene | None | Toluene | Toluene | Benzene | Toluene | Toluene | Benzene | - | - |
| Magnet treatment | | Yes | Yes | Yes | Yes | Yes | Yes | No | No | - | - |
| Characteristics of CB | Cobalt content (ppb) | 2 | 7 | 5 | 7 | 11 | is | 24 | 111 | 28 | 159 |
| | BET specific surface area ($m^2$/g) | 38 | 89 | 138 | 178 | 210 | 376 | 142 | 218 | 63 | 877 |
| | Oil absorption amount (mL/ 100 g) | 177 | 192 | 253 | 257 | 304 | 318 | 249 | 316 | 233 | 390 |
| | BET specific surface area/oil absorption amount | 0.21 | 0.46 | 0.55 | 0.69 | 0.69 | 1.18 | 0.57 | 0.69 | 0.27 | 2.25 |
| Electrode evaluation | Electrode plate resistance ($\Omega \cdot cm^2$) | 179 | 151 | 130 | 96 | 43 | 97 | 129 | 46 | 145 | 218 |

**Reference Signs List**

1 Thermal cracking portion

2 Aging portion
3 Nozzle
10 Cylindrical cracking furnace

**Claims**

1.  Carbon black,

    wherein an oil absorption amount is 150 mL/100 g or more and 400 mL/100 g or less, and
    a cobalt content that is measured by induced coupled plasma-mass spectrometry is 20 ppb or less.

2.  The carbon black according to claim 1,
    wherein the cobalt content is 15 ppb or less.

3.  The carbon black according to claim 1 or 2,
    wherein a BET specific surface area is 35 $m^2$/g or more and 400 $m^2$/g or less.

4.  The carbon black according to any one of claims 1 to 3,

    wherein a BET specific surface area is 130 $m^2$/g or more and 400 $m^2$/g or less,
    the oil absorption amount is 200 mL/100 g or more and 400 mL/100 g or less, and
    when the BET specific surface area is represented by S ($m^2$/g) and the oil absorption amount is represented by A (mL/100 g), a ratio S/A is 0.3 to 2.5.

5.  The carbon black according to claim 4,
    wherein the ratio S/A is 0.4 to 2.5.

6.  The carbon black according to claim 5,
    wherein the ratio S/A is 0.5 to 1.5.

7.  The carbon black according to any one of claims 1 to 6 that is acetylene black.

8.  A carbon black production method, comprising:

    a synthesis step of treating a raw material gas containing a hydrocarbon in a cylindrical cracking furnace to obtain carbon black; and
    a purification step of removing a magnetic foreign matter from the carbon black with a magnet to obtain the carbon black according to any one of claims 1 to 7.

9.  The production method according to claim 8,
    wherein the purification step is a step of removing the magnetic foreign matter from the carbon black obtained in the synthesis step by bringing the carbon black into contact with the magnet or disposing the carbon black near the magnet.

10. The production method according to claim 8 or 9,
    wherein a maximum surface magnetic flux density of the magnet is 1000 mT or more.

11. A composition for an electrode comprising:

    the carbon black according to any one of claims 1 to 7; and
    an active material capable of intercalating and deintercalating lithium ions.

12. An electrode comprising:

the composition for an electrode according to claim 11.

13. A secondary battery comprising:
the electrode according to claim 12.

Fig.1

<table>
<tr><td colspan="2" align="center">**INTERNATIONAL SEARCH REPORT**</td><td colspan="2">International application No.<br><br>**PCT/JP2022/002241**</td></tr>
</table>

**A.    CLASSIFICATION OF SUBJECT MATTER**

*C09C 1/48*(2006.01)i; *C09C 1/54*(2006.01)i; *H01M 4/62*(2006.01)i; *C01B 32/05*(2017.01)i
FI:    C09C1/48; C01B32/05; C09C1/54; H01M4/62 Z

According to International Patent Classification (IPC) or to both national classification and IPC

**B.    FIELDS SEARCHED**

Minimum documentation searched (classification system followed by classification symbols)

   C09C1/48; C09C1/54; H01M4/62; C01B32/05

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2015/020130 A1 (LION SPECIALTY CHEMICALS CO., LTD.) 12 February 2015 (2015-02-12)<br>paragraphs [0002]-[0003], [0024], [0026], [0055]-[0071] | 1-7, 11-13 |
| A | WO 2010/035871 A1 (LION CORPORATION) 01 April 2010 (2010-04-01)<br>entire text | 1-13 |
| A | JP 2014-221889 A (LION CORPORATION) 27 November 2014 (2014-11-27)<br>entire text | 1-13 |
| A | JP 2005-220320 A (FUJI XEROX CO LTD) 18 August 2005 (2005-08-18)<br>entire text | 1-13 |
| A | JP 2002-105355 A (TOKAI CARBON CO LTD) 10 April 2002 (2002-04-10)<br>entire text | 1-13 |
| A | JP 06-136287 A (NIPPON STEEL CHEM CO LTD) 17 May 1994 (1994-05-17)<br>entire text | 1-13 |

☐ Further documents are listed in the continuation of Box C.        ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"    document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br><br>**08 March 2022** | Date of mailing of the international search report<br><br>**22 March 2022** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

International application No.

**PCT/JP2022/002241**

| Patent document cited in search report | | | Publication date (day/month/year) | Patent family member(s) | Publication date (day/month/year) |
|---|---|---|---|---|---|
| WO | 2015/020130 | A1 | 12 February 2015 | US 2016/0190594 A1 paragraphs [0003]-[0006], [0051]-[0054], [0103]-[0142] EP 3031867 A1 CN 105452391 A KR 10-2016-0040194 A | |
| WO | 2010/035871 | A1 | 01 April 2010 | US 2011/0217229 A1 full text EP 2351798 A1 CN 102165022 A KR 10-2011-0066920 A | |
| JP | 2014-221889 | A | 27 November 2014 | TW 201502215 A CN 105283514 A KR 10-2016-0010399 A | |
| JP | 2005-220320 | A | 18 August 2005 | (Family: none) | |
| JP | 2002-105355 | A | 10 April 2002 | (Family: none) | |
| JP | 06-136287 | A | 17 May 1994 | (Family: none) | |

Form PCT/ISA/210 (patent family annex) (January 2015)

**EP 4 234 640 A1**

**Patent documents cited in the description**

- JP 2009035598 A
- JP 2002105355 A